# EUROPEAN PATENT APPLICATION

(11) **EP 4 567 744 A1**
(43) Date of publication of application: **11.06.2025**
(21) Application number: 24216119.8
(22) Date of filing: 28.11.2024
(51) Int. Cl.: G06V 10/774, G06V 10/82, G06V 30/40

(54) **GENERATIVE AI SYSTEM AND METHOD FOR KEY AND VALUE PAIR INFORMATION EXTRACTION FROM DOCUMENTS**

(30) Priority: 05.12.2023 US 202318529128; 30.01.2024 US 202418426991
(71) Applicant: Socure Inc., Incline Village, Nevada 89451 (US)
(72) Inventor: SRINIVASAN, Akshai, Incline Village, NV 89451 (US); LI, Edward, Incline Village, NV 89451 (US); ANTO, James, Incline Village, NV 89451 (US); BHINGE, Suchita, Incline Village, NV 89451 (US); XIAO, Feng, Incline Village, NV 89451 (US); LEVINE, Eric, Incline Village, NV 89451 (US); ABREU, Pablo Ysrrael, Incline Village, NV 89451 (US)
(74) Representative: Derry, Paul Stefan

(57) **Abstract**

A single stage, end to end system and methodology is employed to obtain key-value pairs from original documents and images without the requirement for intermediate results or data as would typically be required in OCR based data capture solutions. The system and methodology of the present invention requires only a single model to generate key-value pairs from original documents and images as opposed to the use of at least two models which are required when traditional OCR data capture solutions are implemented.

## Description

### FIELD OF THE DISCLOSURE

Disclosed embodiments relate to the extraction of data contained in documents for further processing, and more specifically, to the use of machine learning systems to extract key and value pair information contained within documents without the use of traditional optical character recognition (OCR) methodologies.

### BACKGROUND

Optical character recognition (OCR) functionality has been widely available for some time. These systems and methodologies take a document as input and produce contextual data contained within that document as an output. For example, an OCR system may scan in a physical document creating a temporary (or stored) file representing an electronic image of that document. In one case, this image file might be a PDF (Adobe Acrobat) file representing an image of the scanned document. Next, the output of the OCR system is then processed by a second stage module, such as a classification model, in an attempt to generate usable data which may consist of individual data values or key and value pairs. In some cases, more complex relationships between extracted data elements is also possible.

By way of example, a physical driver's license might be the physical document scanned with the goal of extracting information from the license with no manual human intervention. It may be desirable, for example, to scan a driver's license and extract first name, last name, date of birth, driver's license number, expiration date and/or any other data contained within the license. The data can then be used by other systems, processes, programs, etc. where the contextual data is required rather than the data being represented in image form where it would not be usable in such downstream systems, processes, programs, etc. It may also be desirable to match these extracted values with a key which describes the nature of the data (a so-called key-value pair). For instance, in order to allow for further processing of the extracted data, it may helpful to match the actual last name (e.g. "SMITH") with the descriptor for that actual value (e.g. "Last Name").

There exist numerous drawbacks in connection with obtaining such key-value pairs and/or generally extracting data from images or documents when this is accomplished using existing OCR based systems. Typical solutions implement a two stage process for capturing and generating key-value pairs from documents and images. First the image/document is scanned and character recognition is performed by the OCR system. In the second stage, the process attempts, via a classification algorithm, to match the characters generated with specific fields to form the key-value pairs. One of the problems that can occur is if the character recognition stage fails, those errors are propagated to the second stage such that the data classification occurring during the second stage can't succeed given the bad input received.

Another drawback associated with two stage solutions for generating key-value pairs is the requirement that intermediate results be generated by the first stage which is then operated upon by the second stage processing. The requirement for intermediate results requires additional processing and file storage and can thus burden the computing platform and possibly slowing down processing making some applications that require real time results with heavy processing burdens impossible or very difficult to implement.

Yet another drawback is that existing two stage systems are trained independently and as a result, certain important context information may be ignored because each of the models is unaware of the context associated with the other model. As a result, each of the models will not perform as well as preferred because, for example, words or other constructs may not be readily identifiable without the context associated with these constructs which is known to the other model with respect to a particular application. For example, in an image of an ID document, there may be a smudge on the word "name" which is a key of a key-value pair. In existing solutions, where two different models are trained independently, the key "name" may be lost since due to the "name" key being smudged and the fact that the models, being trained independently, are likely to lose the key "name" due to the smudge obscuring it on the physical ID document.

Thus, as will be understood, there is a need for a system and methodology in which images and documents can be processed to generate key-value pairs in a manner that is less error prone, reduces the burden on computing resources and which is generally more efficient and accurate in terms of results produced.

### SUMMARY OF THE INVENTION

It is to be understood that both the following summary and the detailed description are exemplary and explanatory and are intended to provide further explanation of the present embodiments as claimed. Neither the summary nor the description that follows is intended to define or limit the scope of the present embodiments to the particular features mentioned in the summary or in the description. Rather, the scope of the present embodiments is defined by the appended claims.

Embodiments may include a method and system which enhances the generation of key-value pairs from documents and images using machine learning techniques wherein a model is trained using exemplary data and the resulting model is used in production to more effectively and efficiently generate key-value pairs from documents and images.

The system and methodology of the present invention, in some embodiments, may employ an object detection convolutional neural network algorithm to detect and localize data fields on an original image such as a driver's license, product package or any other image or physical object containing one or more data items associated with an expected field.

In various embodiments of the present invention, a single stage, end to end system and methodology is employed to obtain key-value pairs from original documents and images without the requirement for intermediate results or data as would typically be required in OCR based data capture solutions. Another advantage of the present invention is the requirement for only a single model to generate key-value pairs from original documents and images as opposed to the use of at least two models which are required when traditional OCR data capture solutions are implemented.

According to the teachings of the present invention, the system is trained using large quantities of documents and/or images containing data associated with specifically anticipated fields. Once the system is placed into production, the trained model is applied as against newly provided documents and/or images to obtain key-value pairs which can be used in various downstream applications where the key-value pairs are required for further processing.

In some embodiments of the present invention, documents such as driver's licenses may be fed into the model for training. Once trained, system implementing the model is able to efficiently recognize and generate key-value pairs from various types of driver's licenses including those from different states and with different layouts and data characteristics contained within the driver's licenses. The information acquired from the driver's license may then be used in connection with many downstream applications including, for example, various identity verification solutions as well as fraud detection systems in order to make determinations with respect to whether transactions and/or other processes should be allowed to proceed given the information obtained from the provided driver's license.

### BRIEF DESCRIPTION OF THE DRAWINGS

**Figure 1** is a diagram depicting the major components of the system of the present invention, including various elements with which the system of the present invention may interact, in preferred embodiments thereof;
**Figure 2** is an illustration demonstrating the training aspects of the generative key-value capture model of the present invention in a preferred embodiment thereof; and
**Figure 3** is an illustration demonstrating the production aspects of present invention including the generation of key-value pairs from an original document or image according to the teachings contained herein.

### DETAILED DESCRIPTION OF THE INVENTION

The present disclosure will now be described in terms of various exemplary embodiments. This specification discloses one or more embodiments that incorporate features of the present embodiments. The embodiment(s) described, and references in the specification to "one embodiment", "an embodiment", "an example embodiment", etc., indicate that the embodiment(s) described may include a particular feature, structure, or characteristic. Such phrases are not necessarily referring to the same embodiment. The skilled artisan will appreciate that a particular feature, structure, or characteristic described in connection with one embodiment is not necessarily limited to that embodiment but typically has relevance and applicability to one or more other embodiments.

In the several figures, like reference numerals may be used for like elements having like functions even in different drawings. The embodiments described, and their detailed construction and elements, are merely provided to assist in a comprehensive understanding of the present embodiments. Thus, it is apparent that the present embodiments can be carried out in a variety of ways, and does not require any of the specific features described herein. Also, well-known functions or constructions are not described in detail since they would obscure the present embodiments with unnecessary detail.

The description is not to be taken in a limiting sense, but is made merely for the purpose of illustrating the general principles of the present embodiments, since the scope of the present embodiments are best defined by the appended claims.

It should also be noted that in some alternative implementations, the blocks in a flowchart, the communications in a sequence-diagram, the states in a state-diagram, etc., may occur out of the orders illustrated in the figures. That is, the illustrated orders of the blocks/communications/states are not intended to be limiting. Rather, the illustrated blocks/communications/states may be reordered into any suitable order, and some of the blocks/communications/states could occur simultaneously.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items. As used herein, the singular forms "a", "an" and "the" are intended to include the plural forms as well, unless the context clearly indicates otherwise.

The word "exemplary" is used herein to mean "serving as an example, instance, or illustration." Any embodiment described herein as "exemplary" is not necessarily to be construed as preferred or advantageous over other embodiments. Additionally, all embodiments described herein should be considered exemplary unless otherwise stated.

Aspects of the present disclosure are directed to key-value pair extraction methodologies such that such key-value pairs can be accurately and efficiently obtained from physical documents and images. In preferred embodiments, the methodology calls for first training the system to most effectively identify expected key-value pairs, following training of the system, the system is deployed in production to obtain key-value pairs from documents and images even in cases where these key-value pairs would not be accurately obtained through the use of existing two stage OCR based solutions. In some embodiments, training of the system continues in production as additional documents and images are scanned and extraction is performed. Machine learning techniques are employed in order to train the system to be as effective as possible. In some embodiments, key-value extraction is performed in connection with identity verification and/or fraud detection solutions.

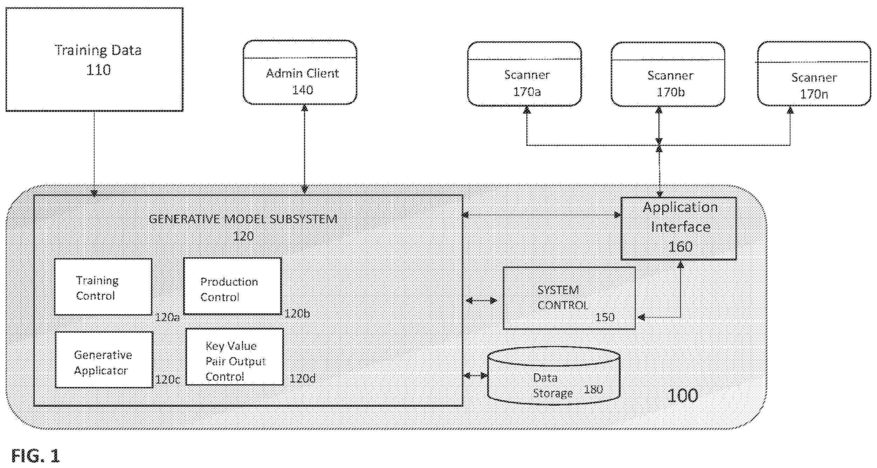

Referring now to FIG. 1, there is illustrated a Key Value Extraction System (KVES) 100 according to one or more embodiments herein. KVES 100 may reside on a single cloud based server although it is also possible for various components of KVES 100 (as described herein) to reside on separate servers. By way of example, KVES 100 may be a computer implemented application which resides on a computing server. As will be apparent from the discussion herein, KVES 100 may include and/or implement all appropriate software and/or hardware for carrying out its key-value pair extraction functionalities and related capabilities. Operation of KVES 100 is under the control of system control 150.

KVES 100 preferably includes Generative Model Subsystem (GMS) 120, which itself is comprised of a number of modules as discussed further herein. GMS 120 operates to extract key-value pairs contained in images and documents which are scanned into KVES 100 following training of GMS 120 as more fully described herein. Documents and/or images are scanned into KVES 100 through scanners 170a, 170b .... 170n which communicate with KVES 100 via application interface 160. Application interface 160 may comprise one or more application programming interfaces (APIs) that permit applications associated with scanners 170 to communicate with KVES 100.

Scanners 170 may be one of many known devices currently available for the purpose of scanning images, documents or any other physical object. Examples of images and documents which fall within the scope and spirit of the present invention include driver's licenses, passports, credit cards, ID cards, social security cards, papers, photos, screen shots and many other physical objects and viewable collections of data from which data can be collected. This invention is limited only by the scope of the claims and may include capture of data from any source for which capture of key-value pairs is desired.

It should also be noted that capture of information via scanning according to the teachings of the present invention may be accomplished in various ways. For example, in the case of a driver's license, KVES 100 may capture data either through a scan of the image on the front and/or back of the license where, for example, name, address and other information is listed. Alternatively or in addition, driver's licenses (and other document types) may contain one or more bar codes containing the same or additional information. The system of the present invention can also read bar codes as is known in the art to capture data values. In some cases, bar coded information may contain key-value pair information which can be used in either or both of the training of the system of the present invention or in production use or in both as discussed in more detail below.

Scanners 170 are used to read and capture the information contained on the document/image. Scanners 170 may communicate with KVES 100 via a wired connection or wirelessly. Alternatively, scanners 170 may communicate with a hub (through a wired or wireless connection) and the hub in turn communicates with KVES 100 via the internet or some other public or private network. Examples of scanners 170 which may be used in connection with the systems and methodologies of the present invention include pen wands, slot scanners, CCD scanners, image scanners and laser scanners as well as other devices capable of scanning in images and documents.

KVES 100 may be accessed, in some embodiments, by an administrative client 140 for the purpose of administrating the operation of the KVES 100 including how and when training is performed as well as various operational aspects associated with the handling of images and documents as they are provided to KVES 100 via scanners 170 for the purpose of extracting key-value pairs. Admin client 140 may comprise a personal computer, a laptop, a handheld computing device such as a smartphone or a tablet or any other similar device.

As will be further detailed in the present description, training data 110 may be provided to KVES 100, and GMS 120 in particular, in order to train GMS 120 to most effectively and accurately extract key-value pairs from documents and images. In some embodiments, results obtained from training operations (including, for example, expected key-value pairs associated with certain types of documents) may be stored in data storage 180. In some embodiments, data storage 180 may alternatively or in addition store data associated with the extraction of key-value pairs such as field names, data classifications, typical document layout information and other related data generated during the training and/or production operation of GMS 120 in according to the teachings of the present invention. This data may, in some embodiments, be used in connection with the initial and/or ongoing training of GMS 120.

Returning now to the specific components of KVES 100, KVES 100 may include various components for training itself as well as extracting key-value pairs from documents and images to increase the likelihood that the correct data contained on these original sources are captured and correctly classified despite the low image quality, deviations in data fields and data layouts, smudges, tears and other complexities associated with extracting data from documents and images and classifying it accordingly.

KVES 100 may reside on one or more physical servers. These servers may include electronic storage, one or more processors, and/or other components. The servers may also include communication lines, or ports to enable the exchange of information with a network and/or other computing platforms. The servers may include a plurality of hardware, software, and/or firmware components operating together to provide the functionality attributed herein to KVES 100.

Electronic storage associated with the servers may comprise non-transitory storage media that electronically stores information. The electronic storage media of electronic storage may include one or both of system storage that is provided integrally (i.e., substantially non-removable) with servers and/or removable storage that is removably connectable to the servers via, for example, a port or a drive.

Electronic storage may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage may include one or more virtual storage resources (e.g., cloud storage, a virtual private network, and/or other virtual storage resources). Electronic storage may store software algorithms, information determined by processors, information received from servers, information received from scanners 170 and admin client 140 as well as training data 110, and/or other information that enables the servers to function as described herein.

While an exemplary architecture is described above, it will readily be understood by one of skill in the art, that an unlimited number of architectures and computing environments are possible while still remaining within the scope and spirit of the present embodiments.

Returning now to the specific components of Generative Model Subsystem (GMS) 120 shown in FIG. 1, GMS 120 includes various components which are described hereinbelow. Operation(s) of each of these components will be described at a high level now and then in further detail later in the present disclosure.

In preferred embodiments, GMS 120 includes training control module 120a. This module is responsible for managing the training process required to train GMS 120 to recognize key-value pairs on a wide variety of documents and images. This includes processing sample documents and images contained within training data 110 during the training phase and apply machine learning techniques to develop a data set which is used during the production phase to identify and extract key-value pairs from documents and images. In some embodiments, GMS 120 may autogenerate a very large set of synthetic data (example images and documents) based on a base set of training data sourced from training data 110 external to system 100. Alternatively training data 110 may comprise sufficient externally generated data so as to adequately initially train GMS 120. In any event, and in preferred embodiments, GMS 120 generates or has made available to it large amounts of sample images and documents which are processed to train the model to recognize documents and images with the same or similar layouts and/or classifications as they are presented to system 100 during production processing.

So, for example, training control 120a may operate to manage the provision of thousands (or some larger or smaller number) of example driver's licenses from various US states and from other countries as part of training data 110. Training data 110 may also include various other document types such as social security cards from various years (possibly with different formats), passports from various countries, images such as invoices, product labels and other documents and images which may be of a classification/type which could be later seen by system 100 during production for extraction of key-value pairs.

Key-value pair data contained on these documents and images may comprise personal information such as names, date of birth, address, credit card information, social security number, gender, drivers' license number, etc. and/or information associated with a product such SKU number, price, quantity, product description, etc. Additional details regarding the training process according to the teachings of the present invention in preferred embodiments are provided below.

Another component contained within GMS 120 in preferred embodiments of the present invention is generative applicator 120c. Generative applicator (as well as the previously mentioned components) works under the control of training control 120a. As described above, training control 120a manages the process of initial training of the model prior to production use and also, in some embodiments, manages the process of continued refinement of the model during production as a result of additional document and image inputs and application of machine learning techniques as further discussed herein.

Generative applicator 120c, in preferred embodiments of the present invention, operates to develop the model based upon labeled key-value pairs used as the ground truth. These labels can be generated by system or developed manually as further discussed below. Generative applicator 120c further receives a scanned image corresponding to a label as part of training data 110. In some embodiments generative applicator component 120c trains a model to function in at least two different paradigms comprising both pixel level and Fourier frequency domain modeling for similarity between the input original ground truth image and the labeled key-value pair serving as the ground truth.

Key-value output control component 120d is also included within GMS 120 according to the present invention, in preferred embodiments thereof. Key-value output control 120d operates under the control of production control component 120b during production operations and functions to generate, in a production environment, model output key-value pairs extracted from images and documents input to system 100 via one or more scanners 170. In preferred embodiments, during production, upon a scan of a document or image by reader 170 and under the direction of system control 150, GMS 120 implements the trained model and, in particular, key-value pair output control 120e functions to generate one or more key-value pairs extracted from the original document or image. These key-value pairs may, in turn, be stored in data storage 180 for use in further training of GMS 120 and/or for downstream use in connection with another application, system or subsystem. In the case of downstream use of the extracted key-value pairs, the extracted data may be communicated by system 100 to another system, such as an identity verification or fraud detection system or other application where the key-value pairs are of use in processing.

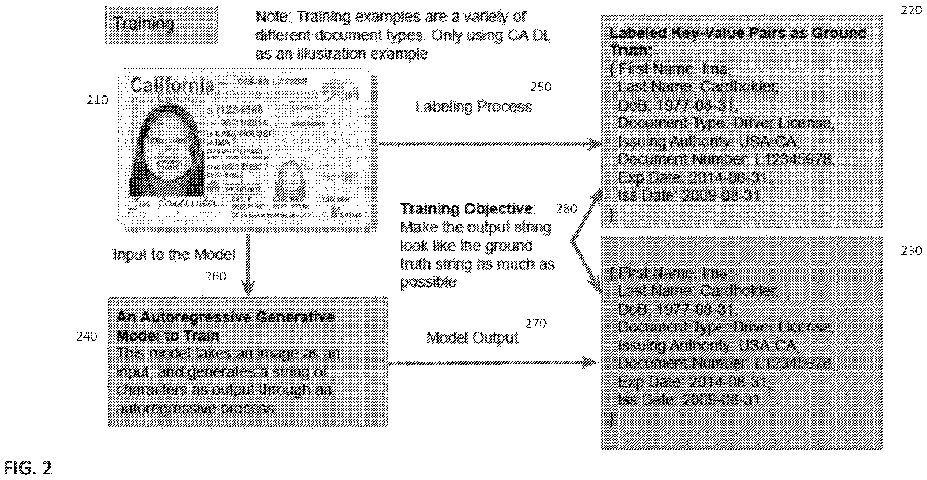

Turning now to Fig. 2 and in connection therewith, a more detailed discussion of the training process as implemented by the system of the present invention in preferred embodiments is now provided. The following discussion assumes training based upon an identity document such as a driver's license for the purpose of identity verification. One of ordinary skill in the art will readily recognize that the teachings of the present invention may be applied in many other contexts including in any case where there exists a document, image, label or other physical element capable of being scanned with the goal of accurately extracting key-value pairs from similar documents, labels or other physical elements which are provided to KVES 100 in a production environment once the system has been trained.

In preferred embodiments of the present invention, GMS 120 is trained in different stages: the first stage is a synthetic data stage where the model learns to read through large amounts of synthetic data of various languages and font types. The second stage occurs through the provision of a large quantity of proxy labelled document information from both driver licenses and passports as well as other documents as desired where ground truth data can be extracted from machine readables such as barcodes and MRZs, which typically encode the textual information in the front of the document. This allows the model to learn semantically how to extract important information from various types of documents, labels and other physically readable elements.

In preferred embodiments, training occurs to a large part prior to placing system 100 in production but the effectiveness of the model may continue to be enhanced during the production phase using the inputs received during usage in production to continually enhance the model in order to achieve better and better results with continued usage. These enhancements and the continued betterment of the model is achieved through machine learning techniques as applied to a machine learning model.

A "machine learning model" or "model" as used herein, refers to a construct that is trained using training data to make predictions or provide probabilities for new data items, whether or not the new data items were included in the training data. Examples of models include: neural networks (traditional, deeps, convolution neural network (CSS), recurrent neural network (RNN)), support vector machines, decision trees, decision tree forests, Parzen windows, Bayes, clustering, reinforcement learning, probability distributions, decision trees, and others. Models can be configured for various situations, data types, sources, and output formats.

With reference to Fig. 2, and by way of example and not limitation, during training, a document such as a driver's license is read by scanner 170. In some embodiments, GMS 120 may be trained using the physical manifestation of the document such as the front of a California driver's license as input to the model 260. As noted in the figure, an autoregressive generative process is used to train the model by using the captured image to generate a string of characters representing the captured data 240. In this case, the data may comprise data elements such as driver's license number, expiration date, sex, height, weight, address, driving restrictions, eye color, date of birth etc.

A labeling process is then applied 250 to where key-value pairs are determined as the ground truth 220. This may be performed manually by one or more individuals inputting the key-value pairs for large numbers of training documents (e.g. driver's licenses from various states) or, if barcoded information is available on the document (e.g. a standardized bar code on the back side of the driver's license), the information contained within those barcodes can be considered trustworthy enough to use as ground truth key-value pairs for the purposes of training the model.

KVES 100 is designed to function in a low ground truth setting as training data for the system can be generated from proxy labels using machine readable information such as barcodes or machine readable zones. Any legitimate id document where the machine readable information aligns with the document presented information can be used to train the system. The design of the system allows highly feasible large scale training using datasets that contains images and their respective textual information without the need to localize exact text locations.

As yet another component of the training process, the ground truth labeled key-value pairs 220 are compared 280 with the model output key-value pairs 270 resulting from the autoregressive generative process described above and with respect to each document/image contained within training data 110 and used in connection with the training process. Based on this comparison between the model generated output and the ground truth key-value pairs, the model can iteratively be improved so as to more accurately generate key-value pairs for different document or image types that KVES 100 expects to see in the future during production.

Training data may, for example, be stored in data storage 180 for use during production processing of documents and images. So, for example, as GMS 120 continues to get better trained on California driver's license layouts and expected key-value pairs, these learnings can be stored in data storage 180 for later usage. As additional document types are made available to KVES 100 either during training or during production, or both, the model, as represented in the stored data structure contained within data storage 180, for example, can be continually improved and broadened in terms of scope of documents and images for which it is trained.

A single KVES 100, then, may be trained to process a multitude of documents types such as driver's licenses from various states and countries, passports from various countries, social security cards, birth certificates from various jurisdictions and a practically unlimited set of other documents and images where key-value pairs extracted therefrom may be useful in downstream applications.

According to the teachings of the present invention, in preferred embodiments thereof, the trained model is configured to identify patterns and features in the training data to enhance the model's understanding of expected layouts, data fields and data types associated with various classifications of documents and images. Therefore, at the time of production, the model applies these learned patterns and features to examples in the wild, and generates key-value pairs based on optical scanning without the aforementioned drawbacks of prior art two stage OCR systems and methodologies.

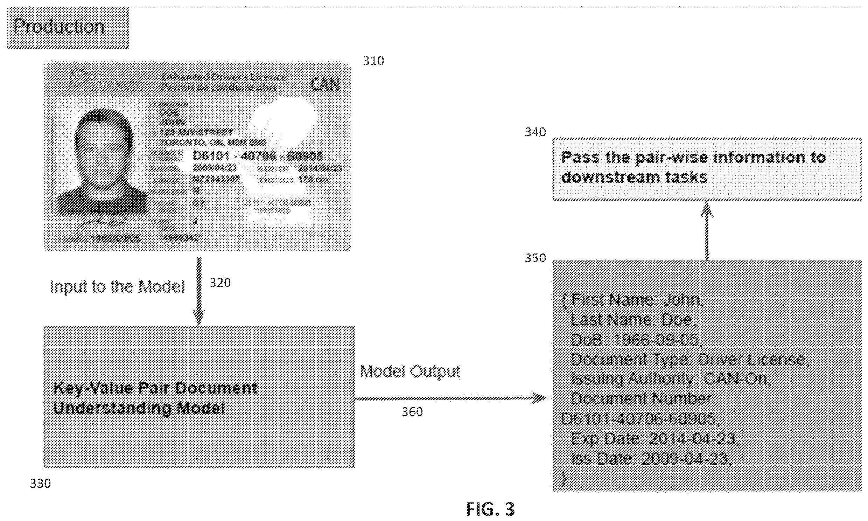

With reference now to Fig. 3, the operation of KVES 100 in the production context and in preferred embodiments thereof is now discussed. In this case, GMS 120 has preferably been previously trained so that it can receive scanned document data "in the wild" via scanner 170. Given the training of the model, it is now possible to extract key-value pairs from these documents with great accuracy even though the scanned data is reflective only of non-formatted optical data. This is achieved through the use of the trained GMS 120 model which accepts an in the wild document or image as input and provides, as output, a set of key-value pairs extracted from that document or image wherein these key-value pairs are likely to accurately reflect the intended fields and data for those fields as contained on the original document.

In connection with the production process and in preferred embodiments, an exemplary document or image 310, for example, a driver's license, is scanned by scanner 170. The optical data captured is next presented as input to the trained model 320. KVES 100 the applies the model 330 using the document characteristics expected in connection with the document type from the trained model (which may be contained in data storage 180) to produce a model output 360 which consists of key-value pairs extracted from the original document 310. These key-value pairs may then be passed 340 to other systems, subsystems and/or downstream applications where the key-value pairs can be used for further processing.

In some embodiments of the present invention, GMS 120 may continually train to enhance performance even during operation in production. In this case, the mapping between the originally extracted key-value pairs generated by GMS 120 and ground truth key value pairs can be analyzed both in terms of accuracy as well as consistency in the pixel and Fourier (frequency) domains to assess improve the model on an iterative basis as operation in production continues.

Potential applications of the system and methodologies of the present invention as described herein include but are not limited to text extraction from structured and unstructured documents, document fraud prevention and identity verification, document digitization, print material indexing, automated data entry, inventory management, restaurant order digitization, vehicle identification and law enforcement, patient record digitization as well as many more applications and in many more contexts.

The present embodiments are not limited to the particular embodiments illustrated in the drawings and described above in detail. Those skilled in the art will recognize that other arrangements could be devised. The present embodiments encompass every possible combination of the various features of each embodiment disclosed. One or more of the elements described herein with respect to various embodiments can be implemented in a more separated or integrated manner than explicitly described, or even removed or rendered as inoperable in certain cases, as is useful in accordance with a particular application While the present embodiments have been described with reference to specific illustrative embodiments, modifications and variations of the present embodiments may be constructed without departing from the spirit and scope of the present embodiments as set forth in the following claims.

While the present embodiments have been described in the context of the embodiments explicitly discussed herein, those skilled in the art will appreciate that the present embodiments are capable of being implemented and distributed in the form of a computer-usable medium (in a variety of forms) containing computer-executable instructions, and that the present embodiments apply equally regardless of the particular type of computer-usable medium which is used to carry out the distribution. An exemplary computer-usable medium is coupled to a computer such the computer can read information including the computer-executable instructions therefrom, and (optionally) write information thereto. Alternatively, the computer-usable medium may be integral to the computer. When the computer-executable instructions are loaded into and executed by the computer, the computer becomes an apparatus for practicing the embodiments. For example, when the computer-executable instructions are loaded into and executed by a general-purpose computer, the general-purpose computer becomes configured thereby into a special-purpose computer. Examples of suitable computer-usable media include: volatile memory such as random access memory (RAM); nonvolatile, hard-coded or programmable-type media such as read only memories (ROMs) or erasable, electrically programmable read only memories (EEPROMs); recordable-type and/or re-recordable media such as floppy disks, hard disk drives, compact discs (CDs), digital versatile discs (DVDs), etc.; and transmission-type media, e.g., digital and/or analog communications links such as those based on electrical-current conductors, light conductors and/or electromagnetic radiation.

Although the present embodiments have been described in detail, those skilled in the art will understand that various changes, substitutions, variations, enhancements, nuances, gradations, lesser forms, alterations, revisions, improvements and knock-offs of the embodiments disclosed herein may be made without departing from the spirit and scope of the embodiments in their broadest form.

## Claims

1. A method of extracting key-value pairs represented within an original image document, the method comprising:
generating a first dataset by reading the original image document, the reading being free of optical character recognition on the original image document and said first dataset comprising information included in said original image document;
providing said first dataset to a trained autoregressive generative model, said trained autoregressive generative model comprising a machine learning based component including at least one labeled key-value pair representation;
processing said first dataset by using said trained autoregressive generative model to (a) compare said first dataset to said at least one labeled key-value pair representation and (b) based on the comparing in (a), generate one or more key-value pairs included in said first dataset.

2. The method of claim 1 wherein said trained generative model functions in at least one of a pixel level domain or a Fourier frequency domain.

3. The method of claim 1 or claim 2 wherein said trained generative model is trained using one or more exemplary training documents representing likely key-value pairs expected to be contained in said original image document.

4. The method of claim 3 wherein said exemplary training documents and said original image document comprises a driver's license.

5. The method of claim 4 wherein said exemplary training documents comprise driver's licenses from a plurality of jurisdictions.

6. The method of any preceding claim wherein said generated key-value pairs are configured to comprise one or more portions usable in an identity verification.

7. The method of any preceding claim wherein said extracted key-value pairs are configured to comprise one or more portions usable in a fraud assessment.

8. A computing system for extracting key-value pairs from an original image document, the computing system comprising:
one or more processors;
one or more memories storing instructions that, when executed by the one or more processors, cause the computing system to perform a process comprising:
generating a first dataset by reading the original image document, the reading being free of optical character recognition on the original image document and said first dataset comprising information included in said original image document;
providing said first dataset to a trained autoregressive generative model, said trained autoregressive generative model comprising a machine learning based component including at least one labeled key-value pair representation;
processing said first dataset using said trained autoregressive generative model to (a) compare said first dataset to said at least one labeled key-value pair representation and (b) based on the comparing in (a), generate one or more key-value pairs included in said first dataset.

9. The system of claim 8 further comprising an identity verification functionality using said extracted key-value pairs.

10. The system of claim 8 or claim 9 further comprising a fraud detection functionality using said extracted key-value pairs.

11. The system of any of claims 8 to 10 wherein said trained generative model is trained using one or more exemplary training documents representing likely key-value pairs expected to be contained in said original image document.
